# EUROPEAN PATENT APPLICATION

(11) **EP 4 700 658 A1**
(43) Date of publication of application: **25.02.2026**
(21) Application number: 25194308.0
(22) Date of filing: 06.08.2025
(51) Int. Cl.: G06N 3/082, G06N 3/084, G06N 3/045, G06N 3/0464, G06N 3/09

(54) **SYSTEM AND METHOD FOR TRAINING ARTIFICIAL NEURAL NETWORKS AT DIFFERENT SCALES**

(30) Priority: 20.08.2024 US 202418810433
(71) Applicant: Avago Technologies International Sales Pte. Limited, Singapore 768923 (SG)
(72) Inventor: Li, Gordon Yong, San Diego, CA, 92127 (US); Chen, Xuemin, Rancho Santa Fe, CA, 92067 (US)
(74) Representative: Grünecker Patent- und Rechtsanwälte PartG mbB

(57) **Abstract**

A computer system is configured to scale an artificial neural network (ANN), by performing the steps of: initializing a first ANN based at least on first parameters and a first number of neurons per layer; training the first ANN using training inputs to adjust weights and biases of the first ANN; upon determining that an accuracy of the first ANN at generating outputs is greater than a threshold value, generating a second number of neurons per layer that is scaled from the first number of neurons per layer; initializing a second ANN based at least on the first parameters and on the second number of neurons per layer; training the second ANN using training inputs to adjust weights and biases of the second ANN; and executing the second ANN to generate inferences based on inference data input thereto.

## Description

### Background

Artificial neural networks (ANNs) are machine-learning models consisting of interconnected layers of nodes, referred to as "neurons." A "neuron" is a fundamental unit or component of an ANN. Neurons in an ANN work together to process input data, transform it through layers of computation, and produce an output. ANNs are trained based on large datasets to recognize complex patterns for generating outputs.

For example, ANNs make predictions, detect anomalies, and categorize data into classes. The power of ANNs to perform such functions has revolutionized many fields such as image and speech recognition, natural language processing, and autonomous systems. Additionally, these models execute in various computing environments, ranging from clusters of server computers in cloud computing environments, to local computers in private computing environments such as desktop computers and smartphones. Furthermore, once an ANN has been implemented, there is often a desire to implement a new version of the model at a different scale.

For example, an ANN may initially be implemented on a local computer, and there may be a desire to create a more powerful version of that ANN that generates more accurate outputs. Creating such more powerful version may require creating a new model entirely, including with more neurons per layer, to achieve more accurate outputs. Additionally, such more powerful version may require more computing resources than the local computer can provide such as more processing and memory resources. There may thus be a desire to implement the more powerful version in a cloud computing environment that has access to more of such computing resources. As another example, a powerful ANN may initially be implemented in one or more clusters of server computers of a cloud computing environment. There may be a desire to create a smaller version of such ANN that a local computer is capable of executing.

However, the process of implementing a new ANN is often burdensome, particularly for implementing a large ANN with many neurons per layer. Such ANNs are trained by inputting increasingly large datasets thereto, performing significant amounts of operations based on such datasets, and continuously adjusting internal parameters of those ANNs. Furthermore, significant trial and error is often required for determining how to initialize such ANNs in the first place, from determining structural parameters such as the number of hidden layers and number of neurons per layer, to other parameters such as which activation functions to perform on data within those neurons. It is often the case that because of its initialization, an ANN may train for a long time, e.g., several days, without ever reaching a desired level of accuracy at generating outputs. Accordingly, in situations such as those discussed above, there is a desire for a faster and simpler approach to creating and training new ANNs.

### Summary

One or more embodiments provide a computer system including a plurality of computers, each of the computers including a processor and memory, wherein the processors of the computers execute instructions stored in the memory of the computers to scale an ANN. The computer system performs the steps of: initializing a first ANN based at least on first parameters and a first number of neurons per layer; and training the first ANN using training inputs to adjust weights and biases of the first ANN, based on outputs that the first ANN generates by performing operations in and between layers of the first ANN based on the weights and biases of the first ANN. The computer system further performs the steps of: upon determining that an accuracy of the first ANN at generating outputs is greater than a threshold value, generating a second number of neurons per layer that is scaled from the first number of neurons per layer; initializing a second ANN based at least on the first parameters and on the second number of neurons per layer; training the second ANN using training inputs to adjust weights and biases of the second ANN, based on outputs that the second ANN generates by performing operations in and between layers of the second ANN based on the weights and biases of the second ANN; and executing the second ANN to generate inferences based on inference data input thereto. Further embodiments include a method comprising the above steps.

### Brief Description of the Drawings

Figure 1 is a block diagram of a computer system in which embodiments may be implemented.
Figure 2 is a block diagram illustrating the training of an original ANN of the computer system.
Figure 3 is a flow diagram of a method that may be performed by a computer system to create and train the original ANN, according to some embodiments.
Figure 4 is a flow diagram of a method that may be performed by the computer system to create and train a new ANN based on the training of the original ANN, according to some embodiments.
Figure 5 is a block diagram illustrating an example of an application of original ANNs and new ANNs.

### Detailed Description

Techniques are described for creating and training "new" ANNs based on training of "original" ANNs of different scales. Such techniques involve first initializing an original ANN based on a set of hyperparameters. Hyperparameters are parameters that specify details for the training process, including, e.g., a number of hidden layers, a number of neurons per layer, and an initialization method for weights and biases of the ANN. The original ANN may be one of many different types of ANNs, including, e.g., a convolutional neural network (CNN) or Transformer. Then, using training inputs such as those from a dataset, the original ANN is trained to generate outputs, e.g., to make predictions, detect anomalies, or categorize data into classes.

As used herein, "initializing" an ANN is setting up the ANN, including assigning starting weights and biases to the ANN, e.g., by sampling from a specific distribution, as discussed further below. "Training" the ANN is updating those starting weights and biases based on errors measured in outputs generated by the ANN. After training, if an accuracy of the original ANN at generating outputs is greater than a threshold value, then the training was successful. Various combinations of hyperparameters may need to be used in various iterations of training the original ANN before finding such success.

Upon determining that the original ANN has been successfully trained, the training of the original ANN is used to initialize a new ANN of a different scale. The new ANN is a larger or smaller version of the same type of ANN, e.g., a larger or smaller CNN or a larger or smaller Transformer. Various hyperparameters used for initializing and training the original ANN are copied (or reused) for initializing and training the new ANN. Various other hyperparameters used for initializing and training the original ANN are scaled based on the desired size (and performance) of the new ANN. For example, if the new ANN is desired to be a larger ANN, some hyperparameters are scaled up, e.g., increasing the number of neurons per layer. Otherwise, if the new ANN is desired to be a smaller ANN, some hyperparameters are scaled down, e.g., decreasing the number of neurons per layer.

Additionally, other parameters generated by the training of the original ANN, referred to herein as "learned parameters," may be used to initialize the new ANN. Such learned parameters include the values of weights and biases of the original ANN after training of the original ANN is completed. If the new ANN is larger than the original ANN, the values of the weights and biases are mapped to a larger number of weights and biases for initializing the new ANN, e.g., by creating duplicates of the values of the weights and biases. Otherwise, if the new ANN is smaller, the values of the weights and biases are mapped to a smaller number of weights and biases for initializing the new ANN, e.g., by creating a subset of the weights and biases.

After the new ANN is initialized, using training inputs such as from a dataset, the new ANN is trained to generate outputs, e.g., to make predictions, detect anomalies, or categorize data into classes. After training, the new ANN is executed to generate inferences based on new data input thereto, referred to herein as "inference data." Inferences are outputs generated by ANNs after they have completed training. Because the new ANN is initialized based on the successful training of the original ANN, the new ANN is more likely to train successfully. Indeed, many of the hyperparameters used for initializing and training the original ANN are copied (or modified slightly), resulting in the usage of a combination of hyperparameters that have proven to be usable for initializing and training an original ANN to generate accurate outputs.

Furthermore, the amount of training needed for the new ANN may decrease if it is initialized based on learned parameters from the training of the original ANN. This decreases computing resources such as processing and memory resources needed for training the new ANN, and allows the new ANN to be used earlier for generating inferences. The techniques described herein benefit many applications involving the training and execution of different scales of ANNs, including an application referred to herein as "ANN filtering." These and further aspects of the invention are discussed below with respect to the drawings.

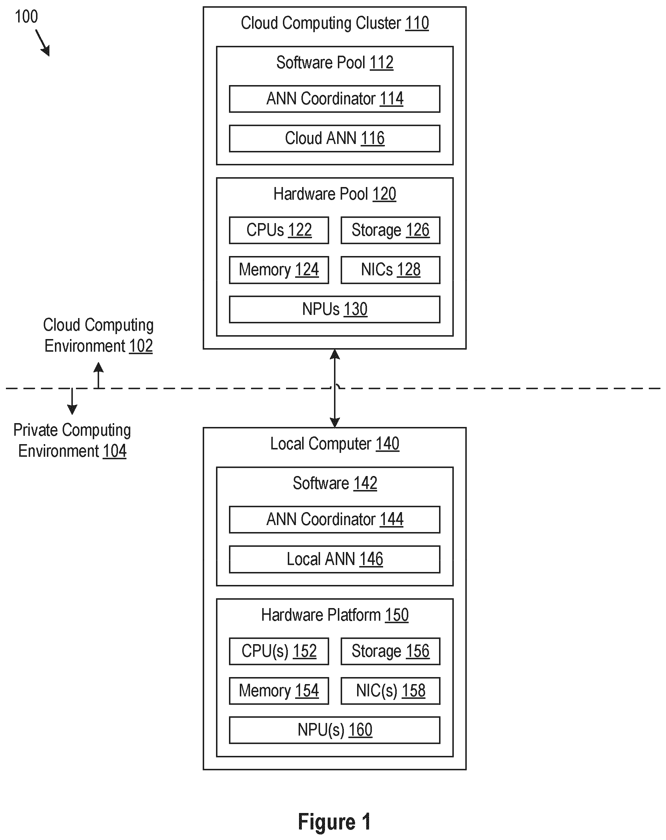

Figure 1 is a block diagram of a computer system 100 in which embodiments may be implemented. Computer system 100 may include a cloud computing environment 102 and a private computing environment 104. As used herein, a computing environment is a collection of hardware, software, and other resources for performing computations within a particular setting. For example, private computing environment 104 may be "on-premise," software therein being provisioned on a particular organization's own information technology (IT) infrastructure. Cloud computing environment 102 may be a "private cloud," including a private data center in which software is provisioned by the same organization for which software is provisioned in private computing environment 104. As another example, cloud computing environment 102 may be a "public cloud," including a public data center at which software is provisioned both for the organization for which software is provisioned in private computing environment 104 and for other organizations.

Cloud computing environment 102 may include a cloud computing cluster 110. Cloud computing cluster 110 is a cluster of host computers (not shown), referred to herein simply as "hosts," such as server computers. The hosts are managed together to provide cluster-level functions such as load balancing across the cluster and distributed power management. Cloud computing cluster 110 includes a hardware pool 120, which is an aggregation of hardware platforms of the hosts such as x86 architecture platforms. Hardware pool 120 supports software pool 112, which is an aggregation of software executing on the hosts.

Hardware pool 120 includes components of computers, such as central processing units (CPUs) 122, memory 124 such as random-access memory (RAM), local storage 126 such as magnetic drives or solid-state drives (SSDs), and network interface controllers (NICs) 128. Local storage 126 may be a virtual storage area network (vSAN), aggregating local storage of each of the hosts. NICs 128 enable the hosts to communicate with each other, e.g., over a local area network (LAN) (not shown) of cloud computing environment 102, and with other devices, e.g., over a wide area network (WAN) (not shown) connecting cloud computing environment 102 and private computing environment 104.

Hardware pool 120 further includes neural processing units (NPUs) 130, which are dedicated processors specifically designed for accelerating ANN operations. CPUs 122 and NPUs 130 are configured to execute instructions such as executable instructions that perform one or more operations described herein, which may be stored in memory 124. It should be noted that embodiments do not require NPUs 130 and may instead utilize other types of hardware for performing operations described herein such as graphics processing units (GPUs). Embodiments may also not include any of such specialized hardware in hardware pool 120 and may simply utilize CPUs 122 for such operations.

Software pool 112 includes an ANN coordinator 114 and a cloud ANN 116. Cloud ANN 116 is an ANN that has been trained to generate inferences based on inference data input thereto. For example, cloud ANN 116 may be an ANN that consumes more computing resources than would be available in computers of private computing environment 104. Cloud ANN 116 may be an ANN that has been trained using an original combination of hyperparameters, e.g., after trial and error involving different combinations of hyperparameters, referred to herein as an "original ANN." Cloud ANN 116 may alternatively be an ANN that has been trained based on the previous training of another (original) ANN, referred to herein as a "new ANN." ANN coordinator 114 is software that may manage cloud ANN 116, such as by starting the training and execution thereof.

Private computing environment 104 may include computers used by a particular organization, including a local computer 140. Local computer 140 may be, e.g., a server computer, desktop computer, or smartphone. Local computer 140 includes a hardware platform 150 such as an x86 architecture platform. Similar to hardware pool 120, hardware platform 150 includes components of a computer, such as one or more CPUs 152, memory 154 such as RAM, local storage 156 such as one or more magnetic drives or SSDs, one or more NICs 158, and one or more NPUs 160. NIC(s) 158 enable local computer 140 to communicate with other devices, e.g., over a LAN (not shown) of private computing environment 104 and over the WAN described above.

CPU(s) 152 and NPU(s) 160 are configured to execute instructions such as executable instructions that perform one or more operations described herein, which may be stored in memory 154. Embodiments do not require NPU(s) 160 and may instead utilize other types of hardware for operations described herein such as one or more GPUs. Additionally, embodiments may also not include any of such specialized hardware in hardware platform 150 and may simply utilize CPU(s) 152 for such operations.

Hardware platform 150 supports software 142, which includes an ANN coordinator 144 and a local ANN 146. Local ANN 146 is an ANN that has been trained to generate inferences based on inference data input thereto. For example, local ANN 146 may be an ANN that consumes fewer computing resources than those consumed by cloud ANN 116. Local ANN 146 may be an original ANN or may alternatively be a new ANN that has been trained based on the previous training of another (original) ANN. ANN coordinator 144 is software that may manage local ANN 146, such as by starting the training and execution thereof.

It should be noted that embodiments are not limited to the computers illustrated in Figure 1. For example, both original and new ANNs may be trained and/or executed in the same computer, e.g., in a single computer in private computing environment 104 or in a single computer in cloud computing environment 102. As another example, both original and new ANNs may be trained and/or executed in different devices but in the same computing environment, e.g., both original and new ANNs in cloud computing environment 102 or both in private computing environment 104. As another example, original and new ANNs may each be trained and/or executed in different computing environments than those illustrated in Figure 1.

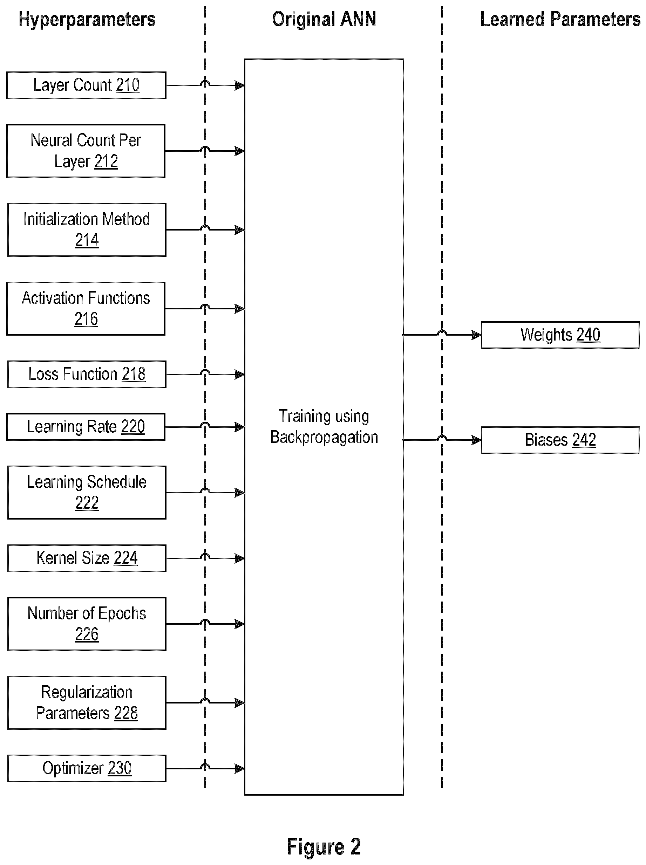

Figure 2 is a block diagram illustrating the training of an original ANN. For example, the original ANN may be cloud ANN 116 or local ANN 146. The parameters involved in training the original ANN include hyperparameters, examples of which are illustrated in the left-hand column, and learned parameters, examples of which are illustrated in the right-hand column. The hyperparameters specify details for initializing and training the original ANN, while the learned parameters are generated by the training of the original ANN. It should be noted that the hyperparameters illustrated in Figure 2 are only examples, not all of which are necessary for initializing and training the original ANN, and there potentially being other hyperparameters used.

Layer count 210 identifies a number of "hidden" layers of neurons to include in the original ANN. The original ANN includes layers for inputs and outputs any number of layers in between, such layers in between referred to as "hidden layers." The value of layer count 210 may be adjusted to increase or decrease the number of such hidden layers. Increasing the number of hidden layers may increase the accuracy at which the original ANN is able to generate outputs based on input data, at the cost of more demand for computing resources. Decreasing the number of hidden layers may decrease such accuracy but result in less demand for such resources.

Neural count per layer 212 specifies a number of neurons to include in each hidden layer. Similar to layer count 210, increasing neural count per layer 212 may increase the accuracy at which the original ANN is able to generate outputs, at the cost of more demand for computing resources. Decreasing neural count per layer 212 may decrease such accuracy but result in less demand for such resources.

Initialization method 214 specifies how to initialize values of weights 240 and biases 242 of the original ANN before training. As one example, initialization method 214 may specify to initialize such values by randomly (or pseudo-randomly) sampling from a distribution such as a normal distribution that has a mean such as 0 and a variance such as 1 divided by neural count per layer 212. As used herein, variance is a statistical measure quantifying the dispersion of data points around a mean. As another example, initialization method 214 may specify to initialize such values by randomly (or pseudo-randomly) sampling from a uniform or normal distribution according to the "Xavier initialization" method. Accordingly, based on initialization method 214, the initial distribution of weights 240 and biases 242 may change as neural count per layer 212 increases or decreases.

Activation functions 216 specify operations to perform at neurons of the original ANN. Adding one or more activation functions 216 to neurons enables the original ANN to learn complex patterns from training data. Examples of activation functions 216 include the Sigmoid function, hyperbolic tangent function, rectified linear unit (ReLU) function, and many others.

Loss function 218 identifies operations to perform for determining the accuracy of outputs from the original ANN. As the accuracy of the original ANN increases, the output of loss function 218 decreases. For example, in the case of "supervised" training, such operations may be performed based on actual outputs generated by the original ANN and expected outputs provided by a training dataset. During each iteration of training, the original ANN generates one or more outputs based on one or more training inputs, and an error is computed in the generated outputs based on loss function 218. The output of loss function 218 is then used for adjusting values of weights 240 and biases 242, such adjusting referred to as "backpropagation." Examples of loss function 218 include mean squared error (MSE) / L2 loss, mean absolute error (MAE) / L1 loss, and many others.

Learning rate 220 controls the amount that the original ANN adjusts weights 240 and biases 242 during each iteration of backpropagation. Increasing learning rate 220 increases the amount that corresponding weights 240 and biases 242 are updated. Decreasing learning rate 220 decreases such amount. Learning rate 220 may be a function of neural count per layer 212. Accordingly, for example, learning rate 220 may increase as neural count per layer 212 increases and decrease as neural count per layer 212 decreases.

Learning schedule 222 controls how learning rate 220 is adjusted throughout the original ANN. For example, according to learning schedule 222, learning rate 220 may be homogeneous, including a single rate for all weights 240 and biases 242. On the other hand, according to learning schedule 222, learning rate 220 may also be heterogenous, including, e.g., a first rate for weights 240 and biases 242 of a first hidden layer and for biases 242 of a second hidden layer, a second rate different from the first rate for weights 240 in the second hidden layer, and a third rate different from the first and second rates for weights 240 of a third hidden layer. As another example, according to learning schedule 222, learning rate 220 may be adjusted to different values at different "epochs," epochs being discussed below.

Kernel size 224 identifies the application of a linear transform by the original ANN. As one example, if the original ANN is a CNN, the original ANN may apply a two-dimensional convolutional operation. Kernel size 224 may specify a size for such operation, e.g., a 3-by-3 convolutional operation or a 5-by-5 convolutional operation.

Number of epochs 226 specifies a number of times to use a set of training data for training the original ANN, each of such times referred to as an "epoch." Increasing number of epochs 226 may increase the accuracy of the original ANN at generating outputs based on the training data. Decreasing number of epochs 226 may decrease such accuracy, but may help to prevent "overfitting." Overfitting is a condition in which an ANN becomes accurate at generating outputs based on the training data at the cost of losing accuracy in generating inferences based on inference data after such training.

Regularization parameters 228 specify adjustments to loss function 218 such as adding "penalty terms" thereto. Regularization parameters 228 may be used for preventing overfitting and thus for improving the accuracy of the original ANN at generating inferences. Examples of regularization parameters 228 are dropout and weight decay.

Optimizer 230 specifies operations for the original ANN to perform on weights 240 and biases 242. Such operations modify the rates at which weights 240 and biases 242 are updated. Examples of optimizer 230 include stochastic gradient decent (SGD), mini-batch SGD, Adam, Momentum, AdaGrad, RMSprop, and many others.

As illustrated in the middle column, the original ANN is trained using backpropagation. During each iteration of the training, after input values are inputted to the original ANN, the original ANN performs operations in and between layers thereof based on its weights and biases, e.g., multiplying values by weights between layers and adding values to biases and performing operations of activation functions 216 in the layers. An error is then computed using loss function 218 based on the output values from the original ANN. For example, in the case of supervised training, the output values from the original ANN are compared to expected output values to compute the error. Then, the error is used for updating weights 240 and biases 242 in a manner that reduces future error of the original ANN at generating outputs. As mentioned earlier, how such updating is performed based on the error may vary based on hyperparameters such as learning rate 220 and optimizer 230.

Iterations of training are generally performed until the error computed based on loss function 218 falls below a target value, at which point the original ANN has "converged." Once the original ANN has converged, the accuracy of the original ANN may be tested using test data that was used during the training. Similar to the training, during each iteration of testing, input values from the test data are inputted to the original ANN and passed through the original ANN, and an error is computed using loss function 218 based on the output values from the original ANN. If the accuracy of the original ANN (e.g., the average error computed over a plurality of iterations of testing) is greater than a threshold, the training may be deemed successful.

Once the original ANN is trained successfully, weights 240 and biases 242 may be copied as learned parameters. Weights 240 are numerical values associated with connections between neurons of the original ANN, weights 240 being coefficients applied (e.g., multiplied) to values output by neurons before being input to other neurons. Biases 242 are numerical values added to outputs of neurons, thus offsetting the outputs and potentially improving the ability of the original ANN to generate outputs.

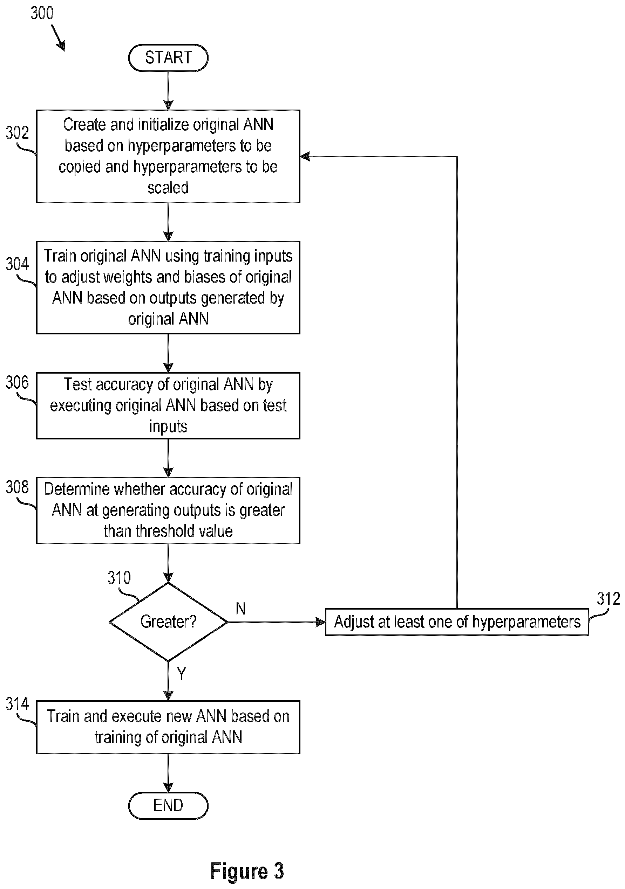

Figure 3 is a flow diagram of a method 300 that may be performed by computer system 100 to create and train an original ANN, according to some embodiments. For example, method 300 may be performed by cloud computing cluster 110 to train local ANN 146 as the original ANN or cloud ANN 116 as the original ANN. As another example, method 300 may be performed by local computer 140 to train local ANN 146 as the original ANN.

At step 302, computer system 100 creates and initializes the original ANN based on a set of hyperparameters. For example, the hyperparameters may have been selected by a human administrator or automatically generated by software. Some of the hyperparameters are hyperparameters that will be copied (or modified slightly) for initializing and training a new ANN if the original ANN is trained successfully, such hyperparameters referred to herein as "hyperparameters to be copied." For example, the hyperparameters to be copied may include one or more of layer count 210, initialization method 214, activation functions 216, loss function 218, learning rate 220, learning schedule 222, kernel size 224, number of epochs 226, regularization parameters 228, and optimizer 230.

Others of the hyperparameters are hyperparameters that will be scaled for initializing and training the new ANN, such hyperparameters referred to herein as "hyperparameters to be scaled." For example, the hyperparameters to be scaled include neural count per layer 212. It should be noted that some of the hyperparameters to be copied may be functions of hyperparameters to be scaled. For example, as mentioned earlier, initialization method 214 and learning rate 220 may be functions of neural count per layer 212.

After step 302, the original ANN includes a number of layers based on layer count 210 and a number of neurons per hidden layer based on neural count per layer 212. Weights and biases of the original ANN may be initialized based on initialization method 214. Additional operations to be performed by the original ANN may be set according to activation functions 216, kernel size 224, regularization parameters 228, and optimizer 230. The training may further be initialized to be performed based on loss function 218, learning rate 220, learning schedule 222, and number of epochs 226.

At step 304, computer system 100 trains the original ANN using training inputs to adjust the weights and biases of the original ANN based on outputs generated by the original ANN in response to the training inputs. For example, the training inputs may be acquired from a dataset. The original ANN generates the outputs by performing operations in and between layers thereof based on the weights and biases of the original ANN. Adjustments of the weights and biases may be based on errors in such outputs determined by applying loss function 218 thereto. The duration of the training may vary. For example, the original ANN may iterate over training inputs of a dataset a number of times determined by number of epochs 226. As another example, the original ANN may iterate over such training inputs until the original ANN converges.

At step 306, computer system 100 tests the accuracy of the original ANN by executing the original ANN based on test inputs. As used herein, test inputs are data exclusively input to the original ANN when testing the accuracy of predictions made thereby. For example, the test inputs may be acquired from the same dataset as the training inputs, the test inputs being reserved for step 306. Computer system 100 may determine the accuracy by inputting the test inputs to the original ANN and applying loss function 218 to resulting outputs from the original ANN. For example, if computer system 100 has access to expected outputs for the test inputs, computer system 100 may compute errors of actual outputs based on the expected outputs. Then, computer system 100 may compute an overall accuracy such as an average accuracy over a plurality of test inputs.

At step 308, computer system 100 determines whether the accuracy of the original ANN at generating outputs is greater than a threshold value. At step 310, if the accuracy is not greater than the threshold value, method 300 moves to step 312. At step 312, computer system 100 adjusts at least one of the hyperparameters previously used for initializing and training the original ANN. For example, the hyperparameter(s) may be adjusted manually by a human administrator or automatically by software. Such adjustment is referred to as "tuning." Steps 302-308 are then repeated based on a new combination of hyperparameters.

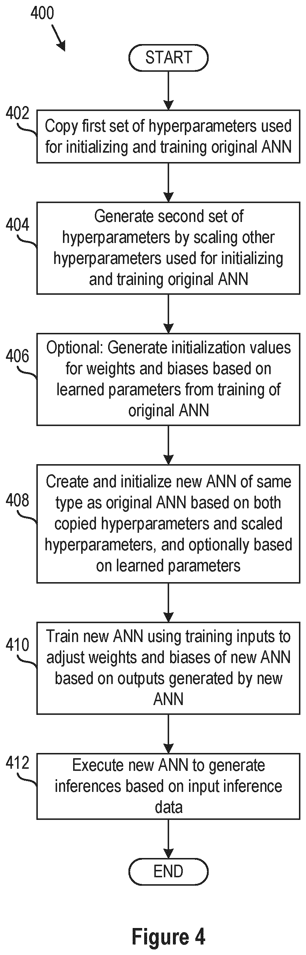

Returning to step 310, if the accuracy is greater than the threshold value, method 300 moves to step 314. At step 314, a new ANN is trained and executed based on the hyperparameters of the original ANN and optionally based on learned parameters obtained by training the original ANN, as discussed below in conjunction with Figure 4. The new ANN is either a larger version of the original ANN with more neurons per hidden layer, or a smaller version of the original ANN with less neurons per hidden layer. After step 314, method 300 ends.

It should be noted that the original ANN trained through method 300 may be executed on a different computer than a computer on which it is trained. For example, local ANN 146 may be trained as the original ANN by cloud computing cluster 110 to then be executed on local computer 140. In such case, the original ANN is transferred, e.g., from cloud computing cluster 110 to local computer 140. For example, after training, cloud computing cluster 110 may save a copy of local ANN 146 as a file to a server computer from which local computer 140 downloads the file to execute local ANN 146.

It should also be noted that the original and new ANNs may be created, initialized, and trained on different computers. For example, the original ANN, e.g., local ANN 146, may be created, initialized, and trained on local computer 140, while the new ANN, e.g., cloud ANN 116, is created, initialized, and trained on cloud computing cluster 110. In such case, after it is determined at step 310 that the accuracy of the original ANN is greater than the threshold value, values of parameters may be transferred to the computer(s) that will create, initialize, and train the new ANN. For example, local computer 140 may transmit the hyperparameters discussed above to cloud computing cluster 110 for initializing and training the new ANN. Additionally, local computer 140 may transmit learned parameters to cloud computing cluster 110, including the values of the weights and biases of the original ANN after training. Additionally, a type of the original ANN may be transferred, e.g., from local computer 140 to cloud computing cluster 110, such as an identifier of a CNN or Transformer.

Figure 4 is a flow diagram of a method 400 that may be performed by computer system 100 to create and train a new ANN based on the training of an original ANN, according to some embodiments. For example, method 400 may be performed by cloud computing cluster 110 or local computer 140 to train local ANN 146 as the new ANN based the training of cloud ANN 116 as the original ANN. As another example, method 400 may be performed by cloud computing cluster 110 to train cloud ANN 116 as the new ANN based on local ANN 146 as the original ANN. At step 402, computer system 100 copies (or slightly modifies) a first set of hyperparameters used for initializing and training the original ANN, referred to above as "hyperparameters to be copied."

At step 404, computer system 100 generates a second set of hyperparameters by scaling other hyperparameters used for initializing and training the original ANN, referred to above as "hyperparameters to be scaled." For example, if the new ANN is desired to be larger than the original ANN, computer system 100 increases (scales up) neural count per layer 212. Otherwise, if the new ANN is desired to be smaller, computer system 100 decreases (scales down) neural count per layer 212. As mentioned earlier, some of the hyperparameters to be copied may be functions of hyperparameters to be scaled.

For example, scaling neural count per layer 212 may change the initial distribution of weights and biases for the new ANN to be created even if the new ANN uses the same function as the original ANN for the variance of initialization method 214. This occurs if such function is based on the value of neural count per layer 212, e.g., 1 divided by neural count per layer 212. As another example, scaling neural count per layer 212 may change learning rate 220 for the new ANN even if the new ANN uses same function as the original ANN. This similarly occurs if learning rate 220 is based on the value of neural count per layer 212.

At step 406, as an optional step, computer system 100 generates initialization values for weights and biases of the new ANN based on learned parameters from the training of the original ANN. Step 406 may be performed to decrease the amount of training needed for the new ANN. For example, if the new ANN is intended to be larger than the original ANN, computer system 100 maps the weights and biases of the learned parameters to a larger number of weights and biases. For example, if the number of neurons per hidden layer is intended to be double that of the original ANN, the learned parameters may be duplicated once to generate initialization weights and biases for the new ANN. Additionally, for example, if the new ANN is intended to be smaller, computer system 100 maps the learned parameters to a smaller number of weights and biases. For example, if the number of neurons per hidden layer is intended to be half of that of the original ANN, half of the values of the learned parameters may be sampled to generate the initialization weights and biases for the new ANN as a subset of the learned parameters.

At step 408, computer system 100 creates and initializes the new ANN based on the hyperparameters copied (or slightly modified) and generated at steps 402 and 404 and optionally based on the learned parameters generated at step 406. The new ANN is a same type as the original ANN, e.g., a CNN or a Transformer. After step 408, the new ANN includes, e.g., a number of neurons per hidden layer based on the scaled value of neural count per layer 212. Weights and biases of the new ANN may be initialized based on the initialization values generated at step 406. The weights and biases may also be initialized, e.g., based on initialization method 214, which may be based on neural counter per layer 212, as discussed above.

At step 410, computer system 100 trains the new ANN using training inputs to adjust the weights and biases of the new ANN based on outputs generated by the new ANN in response to the training inputs. For example, the training inputs may be acquired from a dataset such as the dataset used for training the original ANN. The new ANN generates the outputs by performing operations in and between layers thereof based on the weights and biases of the new ANN. The adjustment of the weights and biases may be based on errors in such outputs determined by applying loss function 218 to the outputs. The duration of the training may vary. For example, the new ANN may iterate over training inputs a number of times determined by number of epochs 226. The new ANN may instead iterate over such training inputs until the output of loss function 218 drops below a target value.

At step 412, computer system 100 executes the new ANN to generate inferences based on inference data input thereto. After step 412, method 400 ends. It should be noted that the new ANN trained through method 400 may be executed on a different computer than a computer on which it is trained. For example, local ANN 146 may be trained as the new ANN by cloud computing cluster 110 to then be executed on local computer 140. In such case, the new ANN is transferred, e.g., from cloud computing cluster 110 to local computer 140, in the manner discussed above.

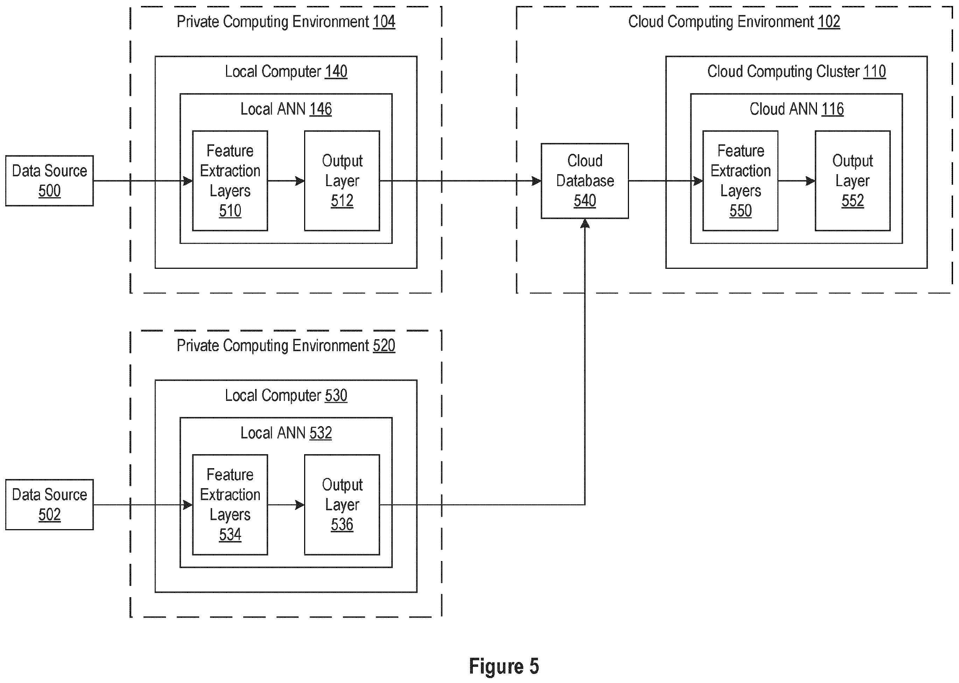

Figure 5 is a block diagram illustrating an example of an application of original ANNs and new ANNs. In the example of Figure 5, it may be, e.g., that local ANN 146 and another local ANN 532 were trained as original ANNs, and then cloud ANN 116 was trained as a new ANN based on the training of local ANNs 146 and 532. Conversely, it may be, e.g., that cloud ANN 116 was trained as an original ANN, and then local ANNs 146 and 532 were trained as new ANNs based on the training of cloud ANN 116. The example of Figure 5 includes two private computing environments 104 and 520. For example, private computing environments 104 and 520 may be on-premise computing environments of different organizations or separate on-premise computing environments of the same organization.

Private computing environments 104 and 520 include local computers 140 and 530, respectively. Like local computer 140, local computer 530 may be, e.g., a server computer, desktop computer, or smartphone, and includes a hardware platform (not shown) such as an x86 architecture platform. Like hardware platform 150, the hardware platform of local computer 530 includes components of a computer, including memory such as RAM, and one or more processors (at least one of CPUs, NPUs, and GPUs), which are configured to execute instructions such as executable instructions that perform one or more operations described herein, which may be stored in the memory of local computer 530.

Local computers 140 and 530 include local ANNs 146 and 532, respectively. Local ANN 146 includes both feature extraction layers 510 and an output layer 512. Similarly, local ANN 532 includes both feature extraction layers 534 and an output layer 536. Feature extraction layers 510 and 534 each include an input layer and hidden layers. Data is input to the input layer of feature extraction layers 510 from a data source 500, passed through the hidden layers of feature extraction layers 510, and output to output layer 512. Similarly, data is input to the input layer of feature extraction layers 534 from a data source 502, passed through the hidden layers of feature extraction layers 534, and output to output layer 536.

In the example of Figure 5, local ANNs 146 and 532 act as filters for data to be analyzed by cloud ANN 116. For example, cloud ANN 116 and local ANNs 146 and 532 may have each been trained to identify irregularities in data such as spectrum samples of channels, e.g., Data Over Cable Service Interface Specification (DOCSIS) upstream and downstream channels. Local ANNs 146 and 532 may collect a significant amount of such data from data sources 500 and 502, respectively, most of which corresponds to normal activity. Uploading all of such data to cloud computing environment 102 may consume significant network bandwidth, e.g., of a WAN connecting cloud computing environment 102 with private computing environments 104 and 520, which may be costly. Instead of uploading all of such data, local ANNs 146 and 532 may be used to identify only that data that has a reasonable chance of being irregular based on outputs from output layers 512 and 536, i.e., that is suspicious. Such suspicious data may then be uploaded to cloud ANN 116 for more accurate analysis.

Although not illustrated in Figure 5, local computers 140 and 530 may each include additional software such as a data collector, a data pre-processor, an event detector, and a data dispatcher. The data collectors of local computers 140 and 530 may acquire data from data sources 500 and 502, respectively. The data pre-processors of local computers 140 and 530 may perform functions on data collected by the respective data collectors such as data normalization and input tensor formatting, before the data is input to local ANNs 146 and 532, respectively. The event detectors of local computers 140 and 530 may determine whether or not data from the respective data sources should be uploaded to cloud computing environment 102 based outputs from the respective local ANNs. For data determined to be uploaded, the data dispatchers of local computers 140 and 530 upload the data to cloud computing environment 102.

Cloud computing environment 102 includes a cloud database 540 that receives data from private computing environments 104 and 520, e.g., from data dispatchers thereof. Cloud ANN 116 includes both feature extraction layers 550 and an output layer 552. Feature extraction layers 550 include an input layer and hidden layers. Data is input to the input layer of feature extraction layers 550 from cloud database 540, passed through the hidden layers of feature extraction layers 550, and output to output layer 552.

As mentioned above, local ANNs 146 and 532 may be trained as original ANNs, and cloud ANN 116 as a new ANN based on the training thereof. In such case, hyperparameters and learned parameters from the training of local ANNs 146 and 532 may be used for initializing and training cloud ANN 116. Local ANNs 146 and 532 may be trained based on the exact same hyperparameters, or some of the hyperparameters may vary. For example, local ANN 146 may have a larger layer count 210, neural count per layer 212, or number of epochs 226. Cloud ANN 116 may trained based on the hyperparameters used for either of local ANNs 146 and 532. Additionally, cloud ANN 116 may be trained based on learned parameters from either or both of local ANNs 146 and 532.

Furthermore, local ANNs 146 and 532 may be used to filter the training data used for training cloud ANN 116. Such filtering may be used to avoid uploading too many instances of similar training data and to thus avoid redundancy. Following the above example of analyzing DOCSIS upstream and downstream channels, local ANNs 146 and 532 may be trained to output values such as percentages indicating whether or not data input thereto is anomalous, i.e., corresponds with anomalous network behavior. Based on the training thereof, local ANNs 146 and 532 may detect a significant amount of data corresponding to normal activity from data sources 500 and 502, respectively.

Accordingly, local ANNs 146 and 532 may be used to detect a subset of the training data from the respective data sources for uploading to cloud database 540 to be used as training data for cloud ANN 116. For example, when values of outputs of local ANNs 146 and 532 are greater than a threshold, event detectors of local computers 140 and 530 may determine that the corresponding training data is likely anomalous and to upload the training data to cloud database 540. When values are not greater than the threshold, the event detectors may determine that the corresponding inference data is likely normal and not to upload the training data. Cloud ANN 116 may then be trained based on the subset of the training data uploaded to cloud database 540. Following the above example, cloud ANN 116 may be trained to output values such as percentages indicating anomalous network behavior, with greater accuracy than that of local ANNs 146 and 532.

After they have each been successfully trained, local ANNs 146 and 532 and cloud ANN 116 are used for generating inferences. The data collectors of local computers 140 and 530 may collect inference data, e.g., by continuing to sample DOCSIS upstream and downstream channels of data sources 500 and 502, respectively. Local ANNs 146 and 532 then generate inferences based on the inference data, e.g., values such as percentages indicating whether or not network data is anomalous. For example, when values of inferences by local ANNs 146 and 532 are greater than a threshold, event detectors of local computers 140 and 530 may determine that the corresponding inference data is likely anomalous and to upload the inference data to cloud database 540.

When values are not greater than the threshold, the event detectors may determine that the corresponding inference data is likely normal and not to upload the inference data to cloud database 540. Cloud ANN 116 may then make inferences on the subset of the inference data uploaded to cloud database 540. In such manner, during the inference stage, local ANNs 146 and 532 continue to be used to filter the data uploaded to cloud database 540. Such filtering avoids uploading data that does not require further analysis from cloud ANN 116.

It should be noted that Figure 5 is only an example of using local ANNs 146 and 532 for filtering data to be uploaded to cloud database 540. Other examples are contemplated. For example, local ANNs 146 and 532 and cloud ANN 116 may each include a plurality of output layers, cloud ANN 116 possibly including more outputs layers than either of local ANNs 146 and 532. As another example, once cloud ANN 116 has been trained, instead of continuing to use feature extraction layers 550 to process data from cloud database 540, cloud ANN 116 may instead simply use outputs from feature extraction layers 510 and 534. According to such example, the outputs of feature extraction layers 510 and 534 may uploaded to cloud database 540 and passed to output layer 552 (or multiple of such output layers). This saves cloud ANN 116 the time and processing consumption of passing inputs through a series of hidden layers.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and nonoptical data storage devices. A computer-readable medium can also be distributed over a networkcoupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

As used herein, the phrase "at least one of" preceding a series of items with the term "and" or "or" to separate any of the items, modifies the list as a whole, rather than each member of the list (i.e., each item). The phrase "at least one of" does not require selection of at least one of each item listed. Rather, the phrase allows a meaning that includes at least one of any one of the items, and/or at least one of any combination of the items. By way of example, the phrases "at least one of A, B, and C" and "at least one of A, B, or C" each refers to only A, only B, only C, and/or any combination of A, B, and C. In any instances in which it is intended that a selection be of "at least one of each of A, B, and C," or alternatively, "at least one of A, at least one of B, and at least one of C," the selection is expressly described as such.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

The invention further comprises the following embodiments forming part of the description:
1. A computer system including a plurality of computers, each of the computers including a processor and memory, wherein the processors of the computers execute instructions stored in the memory of the computers to scale an artificial neural network (ANN), by performing the following steps:
   initializing a first ANN based at least on first parameters and a first number of neurons per layer;
   training the first ANN using training inputs to adjust weights and biases of the first ANN, based on outputs that the first ANN generates by performing operations in and between layers of the first ANN based on the weights and biases of the first ANN;
   upon determining that an accuracy of the first ANN at generating outputs is greater than a threshold value, generating a second number of neurons per layer that is scaled from the first number of neurons per layer;
   initializing a second ANN based at least on the first parameters and on the second number of neurons per layer;
   training the second ANN using training inputs to adjust weights and biases of the second ANN, based on outputs that the second ANN generates by performing operations in and between layers of the second ANN based on the weights and biases of the second ANN; and
   executing the second ANN to generate inferences based on first inference data input thereto.
2. The computer system of embodiment 1, wherein the second ANN executes in one or more computers of a cloud computing environment, and the steps further include:
   generating the second number of neurons per layer to be greater than the first number of neurons per layer.
3. The computer system of embodiment 1, wherein the second ANN executes in a computer of a private computing environment, and the steps further include:
   generating the second number of neurons per layer to be less than the first number of neurons per layer.
4. The computer system of embodiment 1, wherein the steps further include:
   initializing the weights and biases of the first ANN by sampling from a first distribution of values that has a first variance based on the first number of neurons per layer; and
   initializing the weights and biases of the second ANN by sampling from a second distribution of values that has a second variance based on the second number of neurons per layer, wherein the first and second variances are based on the same function.
5. The computer system of embodiment 1, wherein the steps further include:
   executing the first ANN to filter second inference data input thereto to generate a subset of the second inference data including the first inference data.
6. The computer system of embodiment 1, wherein the steps further include:
   upon determining that the accuracy of the first ANN at generating outputs is greater than the threshold value, generating second parameters based on values of the weights of the first ANN and values of the biases of the first ANN; and
   initializing the second ANN based at least on the second parameters.
7. The computer system of embodiment 6, wherein the steps further include:
   generating the second parameters to include more weights and biases than total amounts of the weights and the biases of the first ANN, respectively.
8. The computer system of embodiment 6, wherein the steps further include:
   generating the second parameters to include less weights and biases than total amounts of the weights and the biases of the first ANN, respectively.
9. The computer system of embodiment 1, wherein the steps further include:
   determining the accuracy of the first ANN at generating outputs by executing the first ANN based on test inputs and applying a loss function to outputs generated by the first ANN based on the test inputs.
10. The computer system of embodiment 1, wherein the first and second ANNs are trained on computers in different computing environments, and the steps further include:
   upon determining that the accuracy of the first ANN at generating outputs is greater than the threshold value, transmitting the first parameters and the first number of neurons per layer from one or more computers in a first computing environment to one or more computers in a second computing environment, wherein the one or more computers in the second computing environment initialize the second ANN, train the second ANN, and execute the second ANN.
11. A method of scaling an artificial neural network (ANN), the method comprising:
   initializing a first ANN based at least on first parameters and a first number of neurons per layer;
   training the first ANN using training inputs to adjust weights and biases of the first ANN, based on outputs that the first ANN generates by performing operations in and between layers of the first ANN based on the weights and biases of the first ANN;
   upon determining that an accuracy of the first ANN at generating outputs is greater than a threshold value, generating a second number of neurons per layer that is scaled from the first number of neurons per layer;
   initializing a second ANN based at least on the first parameters and on the second number of neurons per layer;
   training the second ANN using training inputs to adjust weights and biases of the second ANN, based on outputs that the second ANN generates by performing operations in and between layers of the second ANN based on the weights and biases of the second ANN; and
   executing the second ANN to generate inferences based on first inference data input thereto.
12. The method of embodiment 11, wherein the second ANN executes in one or more computers of a cloud computing environment, the method further comprising:
   generating the second number of neurons per layer to be greater than the first number of neurons per layer.
13. The method of embodiment 11, wherein the second ANN executes in a computer of a private computing environment, the method further comprising:
   generating the second number of neurons per layer to be less than the first number of neurons per layer.
14. The method of embodiment 11, further comprising:
   initializing the weights and biases of the first ANN by sampling from a first distribution of values that has a first variance based on the first number of neurons per layer; and
   initializing the weights and biases of the second ANN by sampling from a second distribution of values that has a second variance based on the second number of neurons per layer, wherein the first and second variances are based on the same function.
15. The method of embodiment 11, further comprising:
   executing the first ANN to filter second inference data input thereto to generate a subset of the second inference data including the first inference data.
16. The method of embodiment 11, further comprising:
   upon determining that the accuracy of the first ANN at generating outputs is greater than the threshold value, generating second parameters based on values of the weights of the first ANN and values of the biases of the first ANN; and
   initializing the second ANN based at least on the second parameters.
17. The method of embodiment 16, further comprising:
   generating the second parameters to include more weights and biases than total amounts of the weights and the biases of the first ANN, respectively.
18. The method of embodiment 16, further comprising:
   generating the second parameters to include less weights and biases than total amounts of the weights and the biases of the first ANN, respectively.
19. The method of embodiment 11, further comprising:
   determining the accuracy of the first ANN at generating outputs by executing the first ANN based on test inputs and applying a loss function to outputs generated by the first ANN based on the test inputs.
20. The method of embodiment 11, wherein the first and second ANNs are trained on computers in different computing environments, the method further comprising:
   upon determining that the accuracy of the first ANN at generating outputs is greater than the threshold value, transmitting the first parameters and the first number of neurons per layer from one or more computers in a first computing environment to one or more computers in a second computing environment, wherein the one or more computers in the second computing environment initialize the second ANN, train the second ANN, and execute the second ANN.

## Claims

1. A computer system including a plurality of computers, each of the computers including a processor and memory, wherein the processors of the computers execute instructions stored in the memory of the computers to scale an artificial neural network (ANN), by performing the following steps:
initializing a first ANN based at least on first parameters and a first number of neurons per layer;
training the first ANN using training inputs to adjust weights and biases of the first ANN, based on outputs that the first ANN generates by performing operations in and between layers of the first ANN based on the weights and biases of the first ANN;
upon determining that an accuracy of the first ANN at generating outputs is greater than a threshold value, generating a second number of neurons per layer that is scaled from the first number of neurons per layer;
initializing a second ANN based at least on the first parameters and on the second number of neurons per layer;
training the second ANN using training inputs to adjust weights and biases of the second ANN, based on outputs that the second ANN generates by performing operations in and between layers of the second ANN based on the weights and biases of the second ANN; and
executing the second ANN to generate inferences based on first inference data input thereto.

2. The computer system of claim 1, wherein the second ANN executes in one or more computers of a cloud computing environment, and the steps further include:
generating the second number of neurons per layer to be greater than the first number of neurons per layer.

3. The computer system of claim 1, wherein the second ANN executes in a computer of a private computing environment, and the steps further include:
generating the second number of neurons per layer to be less than the first number of neurons per layer.

4. The computer system of one of claims 1 to 3, wherein the steps further include:
initializing the weights and biases of the first ANN by sampling from a first distribution of values that has a first variance based on the first number of neurons per layer; and
initializing the weights and biases of the second ANN by sampling from a second distribution of values that has a second variance based on the second number of neurons per layer, wherein the first and second variances are based on the same function.

5. The computer system of one of claims 1 to 4, wherein the steps further include:
executing the first ANN to filter second inference data input thereto to generate a subset of the second inference data including the first inference data.

6. The computer system of one of claims 1 to 5, wherein the steps further include:
upon determining that the accuracy of the first ANN at generating outputs is greater than the threshold value, generating second parameters based on values of the weights of the first ANN and values of the biases of the first ANN; and
initializing the second ANN based at least on the second parameters.

7. The computer system of claim 6, wherein the steps further include:
generating the second parameters to include more weights and biases than total amounts of the weights and the biases of the first ANN, respectively,
or
wherein the steps further include:
generating the second parameters to include less weights and biases than total amounts of the weights and the biases of the first ANN, respectively.

8. The computer system of one of claims 1 to 7, wherein the steps further include:
determining the accuracy of the first ANN at generating outputs by executing the first ANN based on test inputs and applying a loss function to outputs generated by the first ANN based on the test inputs.

9. The computer system of one of claims 1 to 8, wherein the first and second ANNs are trained on computers in different computing environments, and the steps further include:
upon determining that the accuracy of the first ANN at generating outputs is greater than the threshold value, transmitting the first parameters and the first number of neurons per layer from one or more computers in a first computing environment to one or more computers in a second computing environment, wherein the one or more computers in the second computing environment initialize the second ANN, train the second ANN, and execute the second ANN.

10. A method of scaling an artificial neural network (ANN), the method comprising:
initializing a first ANN based at least on first parameters and a first number of neurons per layer;
training the first ANN using training inputs to adjust weights and biases of the first ANN, based on outputs that the first ANN generates by performing operations in and between layers of the first ANN based on the weights and biases of the first ANN;
upon determining that an accuracy of the first ANN at generating outputs is greater than a threshold value, generating a second number of neurons per layer that is scaled from the first number of neurons per layer;
initializing a second ANN based at least on the first parameters and on the second number of neurons per layer;
training the second ANN using training inputs to adjust weights and biases of the second ANN, based on outputs that the second ANN generates by performing operations in and between layers of the second ANN based on the weights and biases of the second ANN; and
executing the second ANN to generate inferences based on first inference data input thereto.

11. The method of claim 10, wherein the second ANN executes in one or more computers of a cloud computing environment, the method further comprising:
generating the second number of neurons per layer to be greater than the first number of neurons per layer
or
wherein the second ANN executes in a computer of a private computing environment, the method further comprising:
generating the second number of neurons per layer to be less than the first number of neurons per layer.

12. The method of claim 10 or claim 11, further comprising:
initializing the weights and biases of the first ANN by sampling from a first distribution of values that has a first variance based on the first number of neurons per layer; and
initializing the weights and biases of the second ANN by sampling from a second distribution of values that has a second variance based on the second number of neurons per layer, wherein the first and second variances are based on the same function,
and/or
further comprising:
executing the first ANN to filter second inference data input thereto to generate a subset of the second inference data including the first inference data.

13. The method of one of claims 10 to 12, further comprising:
upon determining that the accuracy of the first ANN at generating outputs is greater than the threshold value, generating second parameters based on values of the weights of the first ANN and values of the biases of the first ANN; and
initializing the second ANN based at least on the second parameters.

14. The method of claim 13, further comprising:
generating the second parameters to include more weights and biases than total amounts of the weights and the biases of the first ANN, respectively,
or
further comprising:
generating the second parameters to include less weights and biases than total amounts of the weights and the biases of the first ANN, respectively.

15. The method of one of claims 10 to 14, further comprising:
determining the accuracy of the first ANN at generating outputs by executing the first ANN based on test inputs and applying a loss function to outputs generated by the first ANN based on the test inputs,
and/or
wherein the first and second ANNs are trained on computers in different computing environments, the method further comprising:
upon determining that the accuracy of the first ANN at generating outputs is greater than the threshold value, transmitting the first parameters and the first number of neurons per layer from one or more computers in a first computing environment to one or more computers in a second computing environment, wherein the one or more computers in the second computing environment initialize the second ANN, train the second ANN, and execute the second ANN.
